# EUROPEAN PATENT APPLICATION

(11) **EP 1 672 960 A1**
(43) Date of publication of application: **21.06.2006**
(21) Application number: 05257593.3
(22) Date of filing: 09.12.2005
(51) Int. Cl.: H05B 3/86

(54) **Electrically heated window**

(30) Priority: 18.12.2004 GB 0427749
(71) Applicant: PILKINGTON PLC, St. Helens, Merseyside WA10 3TT (GB)
(72) Inventor: Chamberlain, Mark A, St. Helens, Merseyside WA11 0GD (GB)
(74) Representative: Halliwell, Anthony Charles

(57) **Abstract**

An electrically heated window (20, 60, 70, 80) is laminated from at least two plies (40, 41) of glazing material and at least one ply (42) of interlayer material extending between the plies of glazing material. The window includes an array (21) of fine, closely spaced wires (22, 72), and electrical connection means (25, 26, 27, 28, 33, 34), for connecting the array to an electrical supply to pass current through the wires and heat the window. The window is provided with a wire-free area (63, 74, 83) to permit data to be transmitted through the window to or from a device positioned in the vicinity of the wire-free area, e.g. for electronic toll collection. At least one additional electrical connection means (61, 62, 71) is provided to ensure that wires which extend to or from the boundary of the wire-free area are connected to the electrical supply. The additional connection means may be a piece of metallic foil or strip in the shape of a letter U or a continuous loop.

## Description

The present invention relates to an electrically heated window, and more particularly but not exclusively to a laminated vehicle window comprising a number of plies, the window including an array of fine, closely spaced wires extending over one of the plies and forming a heating element, the heating effect resulting from passage of electric current through the wires. The invention particularly relates to such a window through which it is desired to transmit data, e.g. electromagnetic signals.

Such windows may be installed as the windscreen, rear window, or other window of a car or other vehicle, or as a window (especially the windscreen) of a commercial vehicle, locomotive or aircraft, or in a boat or ship. The electric heating is used to disperse condensation or ice on the surfaces of the window, and thereby maintain good visibility through the window.

There is an increasing tendency to transmit data through windows to or from sensors or emitters positioned on the inside of the window. For example, road tolls may be automatically paid by transmission of signals between devices positioned above the road and within the vehicle interior. Similarly, car park access may be regulated and parking fees paid by such means. As the signals are generally electromagnetic in nature, the presence of electrically conducting elements in the window degrades the signal as it passes through the window or even blocks it altogether. There is therefore a need to ensure that it is possible transmit data through windows containing conductive elements.

This problem has already been recognised in windows having electrically conductive coatings. US 6,670,581 (WO 00/72635) describes an automotive glazing panel with an electrically heatable solar control coating containing a data transmission window bounded by an electrically conductive band. It is also known from EP 876 083 to provide a busbar in the form of a conductive band around an area of a heated window occupied by an item of equipment, such as a lamp. Neither of these documents addresses the problem of data transmission in a window heated by an array of fine wires.

The present invention provides an electrically heated window laminated from at least two plies of glazing material and at least one ply of interlayer material extending between the plies of glazing material, the window including an array of fine, closely spaced wires carried by one of the plies, and electrical connection means for connecting the array to an electrical supply so as to pass current through the wires and heat the window, characterised by a wire-free area which is intended to permit data to be transmitted through the window to or from a device positioned in the vicinity of the wire-free area, wherein at least one additional electrical connection means is provided to ensure that wires which extend to or from the boundary of the wire-free area are connected to the electrical supply.

By the term "electrical connection means", the skilled person understands in the present context that any of the items generally used in such windows to connect the array of wires are meant, including busbars, additional wires, cables, leads, tags, plugs, spades and their corresponding sockets. Busbars may be composed of metallic foil, strip or tape, tinned copper strip being especially preferred.

A window according to the invention may have at least one pair of opposed non-parallel sides. Such a window is especially suitable for use as an automotive windscreen since the heated area may extend to the bodywork pillars at the sides of the windscreen, known in the car industry as the A-posts, which are generally inclined towards each other, as well as towards the rear of the vehicle.

Generally, a windscreen is in the approximate shape of a trapezium, but with curved edges, with the shorter of the two substantially parallel edges of the trapezium forming the top of the windscreen, and the longer of the two substantially parallel edges at the bottom. A windscreen in the shape of a trapezium normally has an axis of mirror symmetry extending from the top of the windscreen to the bottom, as part of the approximate left-right mirror symmetry which vehicles generally possess.

The invention also relates to a method of making a window as herein described.

The invention will now be further described by way of the following specific embodiments, which are given by way of illustration and not of limitation, and with reference to the accompanying drawings in which:-
Figure 1 is a general view of a known electrically heated window, viewed in a direction approximately normal to the surface of the window;
Figure 2 is a greatly enlarged cross-sectional view of a small marginal part of the window of Figure 1, taken on the line II-II of Figure 1;
Figure 3 is a view, in the same direction as Figure 1, of part of a window of one proposal for solving the present problem;
Figure 4 is a similar view of part of a partially assembled window according to a first embodiment of the invention;
Figure 5 is a similar view to Figure 4;
Figure 6 is a similar view of part of such a window according to a second embodiment of the invention;
Figure 7 is a similar view of part of the window of Figure 6 after completion.
Figure 8 is a thermal image of the part of the window shown in Figure 7, adapted into the form of a line drawing.

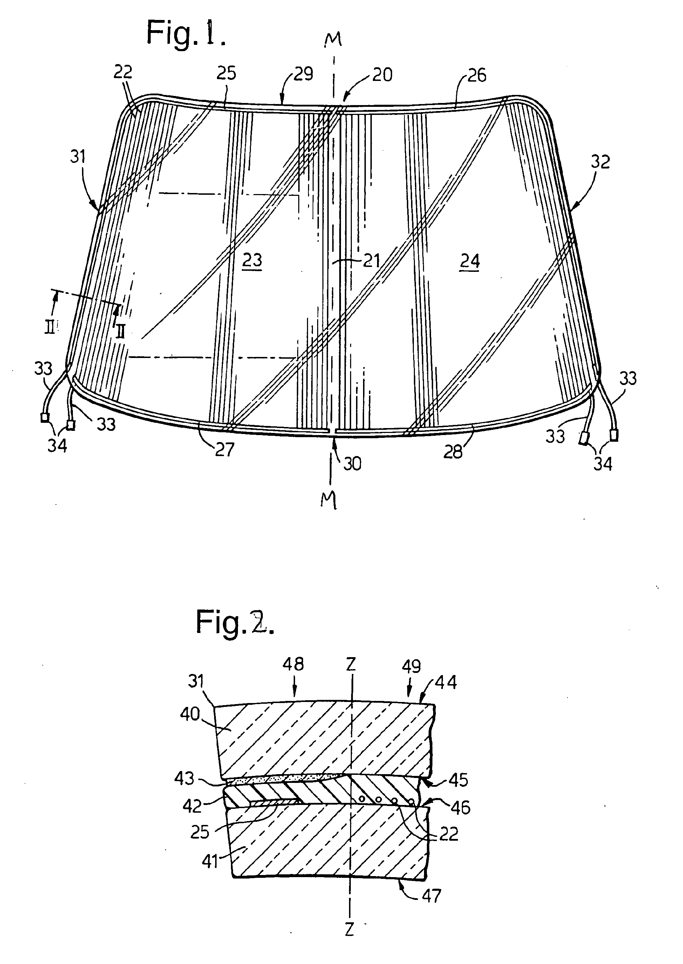

Figure 1 shows a known electrically heated window 20 suitable for use as the windscreen of a vehicle. It is heated by an array 21 of fine, closely spaced wires 22. The wires are arranged in two heating elements 23 and 24 extending between respective upper busbars 25, 26 and lower busbars 27, 28 by means of which electric current is supplied to the two elements independently. The window is generally in the shape of a trapezium, with generally parallel upper and lower long edges 29 and 30, and non-parallel left and right short edges 31 and 32. All these edges are slightly curved, especially towards the corners of the window. The window has an axis of mirror symmetry represented as the line M-M. The busbars are connected to an electrical supply, such as a vehicle electrical system comprising a battery and an alternator (not shown) by flying leads 33 which are provided with terminations 34 for connection to the vehicle's wiring harness.

The window is laminated, and at its simplest, a laminated window comprises a ply of interlayer material ("the interlayer") disposed between exposed inner and outer plies of rigid transparent sheet glazing material, but more sophisticated laminated windows comprise greater numbers of plies of interlayer and glazing material, for example so as to confer greater resistance to impact damage upon the window, and reduce the risk of penetration of the window. The interlayer is normally a flexible plastics material, e.g. polyvinylbutyral, and the plies of glazing material may be glass or a rigid plastics material such as polycarbonate. Laminated windows are also known comprising two or more plies, in which one of the exposed plies is a ply of flexible plastics material which may both increase penetration resistance and reduce the risk of laceration by fragments of glazing material during an impact. Such an anti-lacerative ply normally forms the inward-facing surface of the window, and is generally subjected to a surface treatment to increase its abrasion resistance.

It will be appreciated that as the heating wires are positioned very close to one another in heated windows of the type described in this specification, it is not possible to represent in the drawings all the wires that are actually present in such windows. Consequently it should be understood that only a proportion of the heating wires are shown in the drawings of this specification, and they are shown further apart than is actually the case. Furthermore, to avoid excessive repetition for the draughtsman, where the area covered by wires is relatively large, no wires have been drawn in over part of the area. Instead, dot-dashed lines have been used to indicate the extent of the area covered by wires.

Figure 2 is a cross-section of the window 20 taken along the line II-II of Figure 1. The window comprises two plies of sheet glazing material which may be curved, the ply forming the external surface 44 of the window 20 being designated the outward-facing ply 40, and the ply forming the inner surface 47 of the window (i.e. the surface of the window which, after glazing, faces towards the inside of the vehicle) being designated the inward-facing ply 41. While plies 40, 41 may be composed of any rigid transparent sheet glazing material (e.g. various plastics), a preferred material is glass. The plies have further surfaces 45, 46 which are unexposed, being bonded together to form a laminate by a ply of interlayer material 42, which is transparent in the finished product, extending between the plies of glazing material. The interlayer is generally composed of a plastics material with suitable physical and chemical properties to bond the plies of glazing material together, and confer on the product the requisite performance for its application, e.g. in terms of safety, optical performance etc. A suitable interlayer material is polyvinylbutyral ("pvb"), but other interlayer materials may be used. As mentioned above, other constructions of laminated windows exist which involve more or fewer plies.

Still referring to Figure 2, a substantially opaque band 43 (known in the vehicle glazing industry as an obscuration band) is disposed around the periphery of one face of one of the plies, preferably the inner face 45 of the outer ply 40. The obscuration band 43 may be in the form of a printed coating composed of a ceramic (frit-based) ink, of a colour selected to enhance the aesthetic appearance of the window, commonly black. The obscuration band serves to hide the receiving flange of the vehicle bodywork when the windscreen is glazed in position; and when the window is adhesively glazed, the band not only conceals but also protects the adhesive and/or sealant from light, especially its ultra-violet component. In this specification, references to a transparent portion of the window are references to the portion not obscured by the obscuration band. In Figure 2, an imaginary line Z-Z is shown dividing the opaque portion 48 from the transparent portion 49.

Preferably the obscuration band 43 is disposed on inner, unexposed face 45 of the outward-facing ply 40 because in this position, the band is additionally able to conceal from external view components, e.g. busbars, situated on a peripheral surface of the ply of interlayer 42. For this reason, the obscuration band has been omitted from Figure 1 in order to reveal the busbars. If the obscuration band is disposed on a different surface, for example surface 47, it is possible to apply an organic primer to the inner face 45 instead, so that components situated on a peripheral surface of the ply of interlayer are still concealed.

In the window of Figure 1, the heating elements 23 and 24 extend between electrical connection means in the form of respective busbars 25, 26 which extend along the top edge 29 of the windscreen, and busbars 27, 28 which extend along the bottom edge 30. The busbars are made from electrically conductive strip, normally metal strip, for example, copper strips 3-6 mm wide, preferably 6 mm wide and about 0.04-0.08 mm thick. The strips are preferably tinned with a surface layer of tin, or tin lead alloy (Sn:Pb ratio of 60:40) to protect the copper from oxidation.

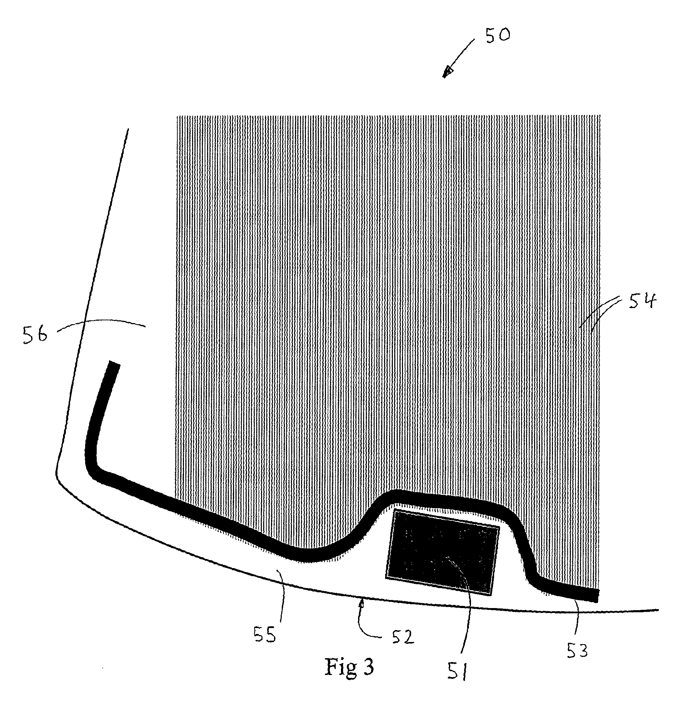

Turning to Figure 3, part of a window 50 is shown, which embodies a proposal, independent from the main invention, for providing a wire-free area in a window heated by passing electric current through wires embedded therein. In this proposal, a wire-free area 51 is provided adjacent an edge, e.g. a lower edge 52, of the window by diverting busbar 53 from its normal position adjacent the edge. The busbar deviates around the area desired to be free of heating wires 54. Four additional corners are thereby introduced into the busbar, although this may be reduced to three by eliminating the straight section of busbar adjacent the wire-free area. It is simplest to manufacture such a window by laying the heating wires 54 up to at least the normal position of the busbar and then cutting them back in the wire-free area where they extend beyond the diverted busbar. The wire-free area 51 could equally well be provided adjacent the upper edge of the window by causing the upper busbar to deviate around a predetermined area desired to be free of wires.

The wire-free area 51 is to be distinguished from an area 55 which is located between the busbar in its normal position and the upper or lower edges of the window, and has the form of a narrow strip or band. Area 55 is not useful for transmission of data because it is adjacent or indeed overlaps the metal of the vehicle bodywork, thus rendering it opaque to electromagnetic waves, and the area 55 is generally too narrow to include a transparent portion away from the bodywork. Similarly, the wire-free area 51 is to be distinguished from an approximately triangular area 56 which may be present adjacent the side of the window (adjacent the A-post) between the array of wires and the edge of the window. It is required that vision through area 56 remains unobstructed for safety reasons, so it is not possible to position a transmitting or receiving device in the vicinity of area 56.

A wire-free area for data transmission needs to be at least 20 x 20 mm, preferably 40 x 40 mm and more preferably at least 50 x 50 mm in extent; it may, but need not, be square, rectangular, circular, oval or elliptical in shape.

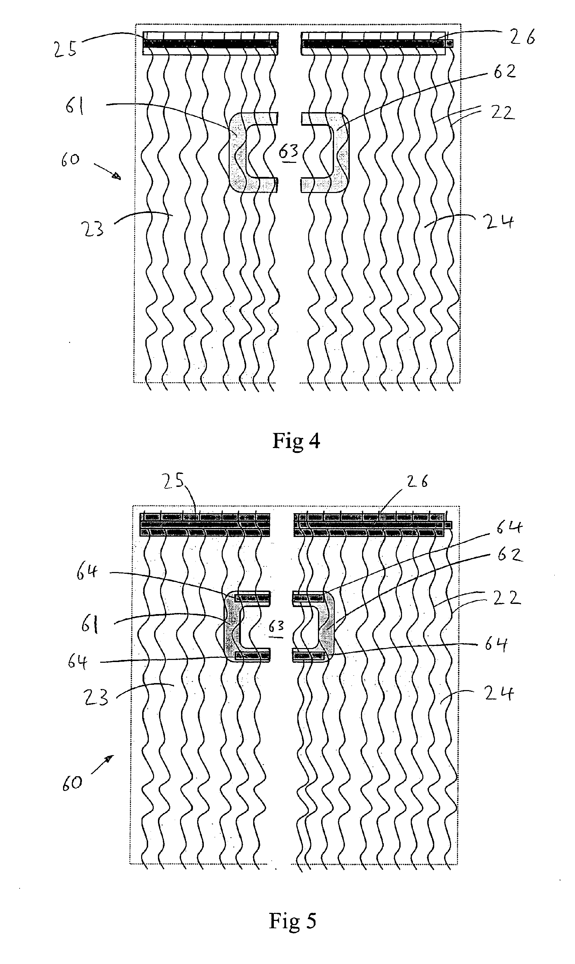

Figures 4 and 5 show part of a partially assembled heated window 60 which is identical to that of Figures 1 and 2 in most aspects. There is one important difference, namely that provision is included for a wire-free area according to the invention, i.e. an additional electrical connection means is provided to ensure that wires which extend to or from the boundary of the wire-free area are connected to the electrical supply. In the invention, the wire-free area is situated within the array of wires, and so it is enclosed and surrounded by heating wires. Clearly, if the wire-free area is positioned between opposed busbars, in this case the upper and lower busbars 25, 26 and 27, 28, the physical and electrical continuity of certain wires is interrupted, and so these wires will not have any heating effect unless measures are taken to provide an electrical connection. In this embodiment, the wire-free area is positioned on the boundary between the two heating elements, and it is important that the additional electrical connection means do not connect the two heating elements to each other.

According to the invention, additional electrical connection means are provided in the form of connection members 61, 62 shaped in the form of a letter U (the U need not be upright). These connection members may be composed of thin metallic foil or metal strip, and tinned copper is preferred; for example, tinned copper strip 3 or 6 mm wide and 50 µm thick may be used. The connection members may be pre-formed (e.g. stamped) to the required shape. Alternatively a piece of wire may be used, which should preferably be thicker (of greater diameter) than the individual heating wires, since it is required to carry the current of several heating wires. Single strand copper wire (as opposed to multi-strand flex or braid) is preferred as it may easily be shaped as desired.

Windows of the type described here, i.e. with resistance heating resulting from the passage of electric current through an array of wires, are preferably manufactured by a process as described in EP 443 691 or EP 788 294 in which a piece of suitably shaped interlayer is placed on a rotatable drum, and a continuous length of wire is deposited from a suitable wire-laying head while the drum is rotated. When wiring is complete, the wires are cut in a direction parallel to the axis of rotation of the drum at or adjacent to an edge of the interlayer, and the piece of interlayer is removed for further processing. As this is a continuous wire-laying process (as opposed to one in which multiple discrete lengths of wire are deposited), when incorporating a wire-free area it is simplest to place the connection member(s) on the interlayer and lay wire over it, then remove the unwanted segments of wire later. Accordingly, in Figure 4, wires are shown crossing the area 63, located between the two U-shaped connection members, which is intended to be free of wires. The wires are removed by cutting along the inner edges of the U-shaped members, and this may be facilitated by providing a piece of masking tape over area 63 before laying the wires and placing a second piece of tape over the first after laying the wires, so as to trap the wires between the two pieces of tape and permit their removal in a single operation.

Figure 5 shows an additional but optional feature which improves the window and further facilitates the manufacturing process. Additional pieces of foil strip 64 (or other material as mentioned above) are laid on to the connection members, over the wires, so that the wires extend between the upper and lower pieces of foil, trapping the wires between them. When the unwanted wire segments are removed, the superimposed pieces of foil reduce the risk of inadvertently removing wires from outside the wire-free area. Preferably the additional pieces of foil are coated with a low melting point solder selected to melt during autoclaving of the laminated window, as described in EP 385 791. This ensures that the wires are securely held between the foil strips, and reduces the risk of water ingress by capillary action along the wires. This is particularly important if the wire-free area is to be located near one of the edges of the window, where the plies are exposed and water ingress is more likely.

The aesthetic appearance of the window may be important, especially when it is used as a vehicle windscreen, and in this case the connection member may be coloured on its external face or side to disguise its appearance or match surrounding features. As already mentioned in connection with Figure 2, windscreens are normally provided with a black obscuration band, and so it is preferable to colour the connection member black on its external face. A preferred way of achieving this is to coat the member with a black polyamide coating, available as self-adhesive tape 8 mm wide and 0.025 mm thick under product code PPI LM-962 from PPI Adhesive Products Ltd of Waterford Industrial Estate, Waterford, Ireland.

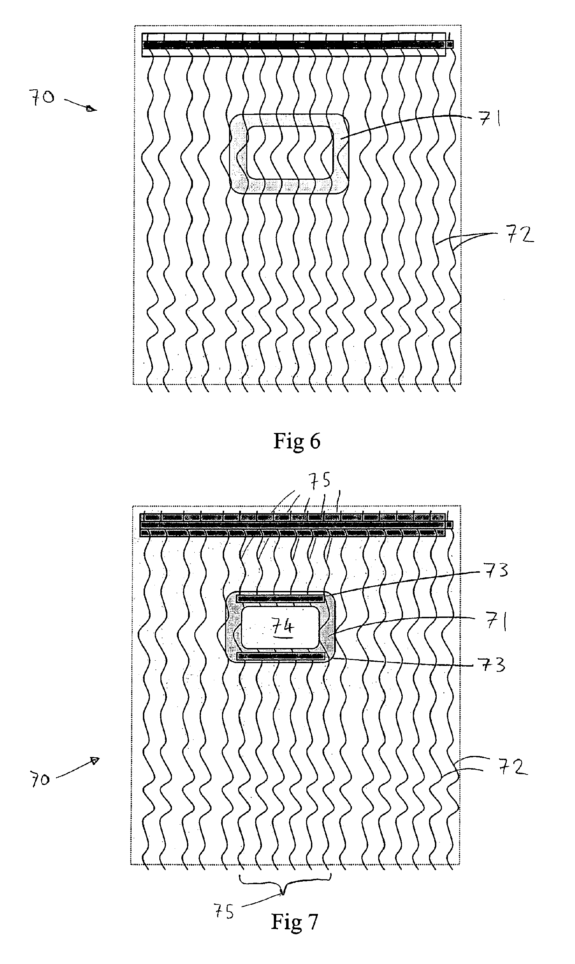

Figure 6 shows a second embodiment of the invention, again relating a heated window 70 substantially as shown in Figures 1 and 2, but provided with a wire-free area positioned within a heating element, rather than at its edge, so that the wire-free area is surrounded by the array of wires. An additional electrical connection means is provided by a connection member 71 in the form of a continuous loop or frame. The comments made above in connection with the first embodiment regarding laying of heating wires 72, removal of unwanted wire segments and use of a black coating apply to the present embodiment as well.

Figure 7 corresponds to Figure 5 in that it shows the additional but optional feature of adding one or more further pieces of foil 73 superimposed on the connection member 71 to trap the wires and reduce the risk of water ingress. Figure 7 also shows the window 70 after manufacturing has been completed, including removing the unwanted wire segments within the frame of the connection member, so the wire-free area 74 is clearly evident. It is also evident how certain of the heating wires, designated 75, would be left disconnected, i.e. not form part of the heating circuit, without the invention, because the wire-free area interrupts the continuity of the wires between the busbars. The connection member 71 is in electrical contact with the free ends of the wires 75, and bridges the region where segments of wire have been removed. Each wire may typically carry in the region of 0.06 A, so if 30 wires are interrupted (this corresponds to a wire-free area 60 mm wide with an average wire spacing of 2 mm), then the connection member would carry 1.8 A in total, with approximately half of the current passing along each side or limb of the member. The width and thickness of the foil for the connection member are selected to suit the anticipated current, and it will be appreciated that as this is not a large current, the dimensions of the connection member may be kept relatively small so that it is as unobtrusive as possible.

As explained in connection with Figure 3, a wire-free area for data transmission needs to be at least 20 x 20 mm, preferably 40 x 40 mm and more preferably at least 50 x 50 mm in extent; it may, but need not, be square, rectangular, circular, oval or elliptical in shape. This applies to the first and second embodiments as well.

As mentioned earlier, a window according to the invention is especially suitable for use as an automotive windscreen, which conventionally has left-right mirror symmetry about an axis which extends from the top of the windscreen to the bottom, as shown in Figure 1. This axis may also be referred to as the centreline of the windscreen. The wire-free area may be positioned on this axis, which, in a window with two heating elements, leads to the arrangement illustrated in Figures 4 and 5. Normally a rear view mirror is positioned on the axis, either mounted directly on the windscreen, or suspended from the roof, and it is also standard practice to arrange for the obscuration band to extend downwards in the vicinity of the mirror to conceal its mount and/or reduce dazzling from sunlight passing through the gap which usually exists between the sun visors. This is an area of the windscreen through which vision is not required, and so the wire-free area, and the associated sensor or emitter, is preferably positioned in the vicinity of the rear view mirror where it will not obstruct vision and may easily be concealed. It can also be positioned off-centre, in an asymmetric position, preferably near the top or bottom edges where it does not interfere with the driver's vision.

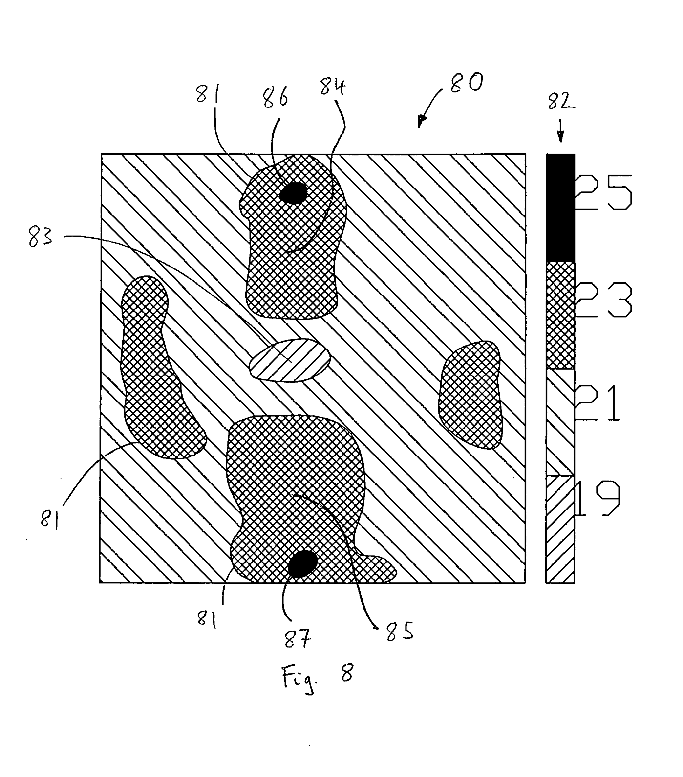

Figure 8 is a plot 80 showing temperature contours 81, and it was prepared from a thermal image in which temperatures were depicted by colours. Various different hatching patterns are used to denote areas of different temperatures, as may be deduced from the temperature scale 82, on which temperatures are given in °C. The thermal image shows the window of Figures 6 and 7 after being in operation (i.e. connected to an electrical supply, with current passing through the wires) for a short time. The temperatures generated have not yet reached typical operating levels, but are already indicative of the temperature differentials which the heating arrangement produces. The wire-free area is represented as area 83, which remains below 19°C, being unheated, whereas the majority of the window is between 19°C and 21°C. It can be seen that areas 84 and 85 above and below the wire-free area are slightly warmer, being between 21°C and 23°C. These areas correspond to the position of wires 75 (Figure 7) which are somewhat shorter in overall length as a result of the presence of the wire-free area. Consequently they have a lower resistance and run somewhat hotter than the full length wires. There are two hotspots visible in the plot, namely 86 and 87. However these are not related to the presence of the wire-free area, but correspond to the positions at which electrical connectors are attached to the busbars. These positions are inevitably points of higher current density, with correspondingly greater heating effect. The temperature variation over the heated area excluding the connection points is only 4°C (19°C - 23°C) which, even after allowing for the short heating time, is considered to be low, and is significantly better than is obtained with a window of the type described in US 6,670,581, i.e. a window heated by a conductive coating, with a data transmission area within the coated area.

## Claims

1. An electrically heated window laminated from at least two plies of glazing material and at least one ply of interlayer material extending between the plies of glazing material, the window including an array of fine, closely spaced wires carried by one of the plies, and electrical connection means for connecting the array to an electrical supply so as to pass current through the wires and heat the window,
**characterised in that** a wire-free area is provided which is intended to permit data to be transmitted through the window to or from a device positioned in the vicinity of the wire-free area,
and at least one additional electrical connection means is provided to ensure that wires which extend to or from the boundary of the wire-free area are connected to the electrical supply.

2. A window according to claim 1, wherein the additional electrical connection means comprises a connection member in the shape of a letter U.

3. A window according to claim 1, wherein the additional electrical connection means comprises a connection member in the shape of a continuous loop.

4. A window according to any preceding claim, wherein the additional electrical connection means comprises a piece of thin metallic foil.

5. A window according to claim 4, wherein the additional electrical connection means comprises at least two pieces of foil, one superimposed on the other, with wires extending between the at least two pieces of foil.

6. A window according to any one of claims 1 to 3, wherein the additional electrical connection means comprises a further wire which is of greater diameter than the wires making up the array.

7. A window according to any preceding claim, the window having an axis of mirror symmetry, wherein the wire-free area is positioned on the axis.

8. A window according to any preceding claim, being a windscreen for a vehicle equipped with a rear view mirror, wherein the wire-free area is positioned in the vicinity of the rear view mirror.

9. A window according to any preceding claim, having opposed busbars with the array of wires extending between them, wherein the wire-free area is positioned between the opposed busbars.

10. A window according to any preceding claim, wherein the wire-free area is surrounded by the wires of the array.

11. A method of making a window according to any preceding claim.
